# EUROPÄISCHE PATENTSCHRIFT

(11) **EP 3 486 113 B1**
(45) Veröffentlichungstag und Bekanntmachung des Hinweises auf die Patenterteilung: **08.09.2021**
(21) Anmeldenummer: 18205820.6
(22) Anmeldetag: 13.11.2018
(51) Int. Cl.: B60N 2/58

(54) **VERKLEIDUNGSELEMENT ZUR SEITLICHEN VERKLEIDUNG EINES SITZGESTELLS EINES SITZTEILS EINES FAHRZEUGSITZES UND FAHRZEUGSITZ**
VEHICLE SEAT AND CLADDING ELEMENT FOR COVERING THE SIDE OF A FRAME OF A SITTING PART OF A VEHICLE SEAT
ÉLÉMENT DE REVÊTEMENT DESTINÉ AU REVÊTEMENT LATÉRAL D'UN CADRE DE SIÈGE D'UNE PARTIE DE SIÈGE D'UN SIÈGE DE VÉHICULE ET SIÈGE DE VÉHICULE

(30) Priorität: 17.11.2017 DE 102017220636
(43) Veröffentlichungstag der Anmeldung: 22.05.2019
(73) Patentinhaber: Adient Engineering and IP GmbH, 51399 Burscheid (DE)
(72) Erfinder: Cordonnier, Regis, 91460 Marcoussis (FR); Lepage, Rémy, 92100 Boulogne Billancourt (FR); Pierre, Henry, 75014 Paris (FR); Schulze, Uwe, 51149 Köln (DE); Schmidt, Claudia, 50171 Kerpen Blatzheim (DE); Cremer, Pia, 51375 Leverkusen (DE); Murr, Karin, 51103 Köln (DE)
(74) Vertreter: Liedtke & Partner Patentanwälte

(56) Entgegenhaltungen:
- EP-A1- 0 530 769
- EP-A1- 2 960 108
- WO-A1-2015/189394
- DE-A1-102010 062 707
- DE-A1-102015 210 653
- DE-A1-102016 002 587

## Beschreibung

Die Erfindung betrifft ein Sitzteil eines Fahrzeugsitzes. Die Erfindung betrifft weiterhin einen Fahrzeugsitz.

Aus dem Stand der Technik sind Verkleidungselemente zur seitlichen Verkleidung eines Sitzgestells eines Sitzteils eines Fahrzeugsitzes bekannt. Bekannte Verkleidungselemente sind beispielsweise aus Kunststoff gebildet. Seitliche Verkleidungselemente sind solche Verkleidungselemente, die am Fahrzeugsitz quer zur Fahrzeuglängsrichtung anzuordnen oder angeordnet sind, also keine front- oder rückseitig anzuordnenden oder angeordneten Verkleidungselemente.

Aus dem Stand der Technik sind Fahrzeugsitze bekannt, die eine Sitzlehne und ein Sitzteil umfassen, wobei das Sitzteil ein Sitzpolster mit einem Bezug sowie ein Sitzgestell umfasst, wobei das Sitzgestell mit zumindest einem gattungsgemäßen Verkleidungselement verkleidet ist.

Aus WO 2015/189394 A1 sind ein Verfahren zur Herstellung eines mit einem Bezug versehenen Elements und ein solches Element bekannt.

Aus DE 10 2015 210 653 A1 ist ein Bezug-Laminat aus nachwachsenden Fasern bekannt.

Aus DE 10 2010 062 707 A1 ist ein Verfahren zur Herstellung von Polsterteilen bekannt.

Aus DE 10 2016 002 587 A1 ist ein Sitzbezug aus Leder für einen Fahrzeugsitz bekannt.

Aus EP 2 960 108 A1 sind ein Sitzbezug, ein Fahrzeugsitz damit und ein Verfahren zu dessen Herstellung bekannt.

Aus EP 0 530 769 A1 sind ein schmelzfaserverklebter Schichtstoff, ein Verfahren und ein Zwischenprodukt zu dessen Herstellung und Verwendung bekannt.

Der Erfindung liegt die Aufgabe zu Grunde, ein gegenüber dem Stand der Technik verbessertes Sitzteil sowie einen verbesserten Fahrzeugsitz anzugeben.

Die Erfindung wird das Sitzteil betreffend mit den in Anspruch 1 angegebenen Merkmalen gelöst. Den Fahrzeugsitz betreffend wird die Erfindung mit den in Anspruch 14 angegebenen Merkmalen gelöst.

Ein Verkleidungselement dient zur seitlichen Verkleidung eines Sitzgestells eines Sitzteils eines Fahrzeugsitzes. Das Verkleidungselement umfasst ein innenseitiges weiches Verkleidungsteil und ein außenseitig darauf angeordnetes Bezugselement.

Dadurch, dass auf dem innenseitigen weichen Verkleidungsteil ein Bezugselement, beispielsweise ein Textil, Kunstleder oder Leder angeordnet ist, erzielt das seitliche Verkleidungselement des erfindungsgemäßen Sitzteils sowohl optisch als auch haptisch einen besonders hochwertigen Eindruck. Bei einem Berühren des Verkleidungselements wird insbesondere ein haptischer Eindruck erzielt, der sowohl einem Polster als auch einem Verkleidungselement zugeordnet werden kann, weil das Verkleidungselement wegen des innenseitigen weichen Verkleidungsteils vergleichsweise einfach komprimierbar und/oder deformierbar ist.

Eine Ausgestaltung des erfindungsgemäßen Sitzteils sieht vor, dass das Bezugselement des Verkleidungselements beispielsweise mit einer Anzahl von Nähten an dem innenseitigen weichen Verkleidungsteil befestigt ist. Dadurch ist eine einfache Herstellung möglich, wobei ein optisch besonders hochwertiger Eindruck sehr einfach erzeugbar ist.

Eine weitere Ausgestaltung des erfindungsgemäßen Sitzteils sieht vor, dass das Bezugselement des Verkleidungselements mit dem innenseitigen weichen Verkleidungsteil verklebt oder mittels einer Schweißtechnik verbunden ist, wodurch die Verbindung zwischen Bezugselement und Verkleidungsteil besonders einfach herstellbar und mechanisch hoch belastbar ist.

Eine andere Ausgestaltung des erfindungsgemäßen Sitzteils sieht vor, dass das Bezugselement mit dem innenseitigen weichen Verkleidungsteil geheftet ist, wodurch die Verbindung zwischen Bezugselement und Verkleidungsteil ebenfalls besonders einfach herstellbar und mechanisch hoch belastbar ist.

Eine andere Ausgestaltung des erfindungsgemäßen Sitzteils sieht vor, dass das innenseitige weiche Verkleidungsteil aus einem geschäumten Material oder aus einem weichen Kunststoffmaterial gebildet ist, wodurch der hochwertige haptische Eindruck sehr einfach erzielbar ist.

Dabei ist vorzugsweise das innenseitige weiche Verkleidungsteil warmumgeformt, insbesondere warmgepresst und/oder hochfrequenzumgeformt. Dadurch ist auf einfache Weise eine dreidimensionale Form, insbesondere eine Schalenform herstellbar.

Eine andere Ausgestaltung des erfindungsgemäßen Sitzteils sieht bei dem Verkleidungselement eine Anzahl von Durchgangsöffnungen und/oder eine Anzahl von Ausnehmungen vor. Durch eine Durchgangsöffnung ist eine Durchführung eines Bauteils für eine Sitzlehnenverstellung ermöglicht. Durch eine Ausnehmung ist eine Durchführung eines Bestandteils eines Insassenrückhaltesystems, wie eines Gurtschlosses oder eines Bauteils, für eine Sitzhöhenverstellung ermöglicht.

Die Erfindung sieht bei dem Verkleidungselement eine Anzahl von jeweils abstehenden Randbereichen zur Befestigung an dem Sitzgestell vor. Diese Befestigung kann zumindest abschnittsweise unmittelbar am Sitzgestell erfolgen. Zusätzlich oder optional kann diese Befestigung am Sitzgestell auch zumindest abschnittsweise mittelbar erfolgen. Beispielsweise dadurch, dass jeweils abstehende Randbereiche von einem Sitzpolster des Sitzteils überfangen und/oder von diesem eingeklemmt und/oder an diesem befestigt werden.

Eine andere Ausgestaltung des erfindungsgemäßen Sitzteils sieht vor, dass das Bezugselement eine Deckmaterialschicht, insbesondere ein Deckmaterialzuschnitt ist und dass eine Trägermaterialschicht, insbesondere ein Trägermaterialzuschnitt vorgesehen ist und dass zwischen der Deckmaterialschicht und der Trägermaterialschicht eine Klebeschicht, insbesondere ein Klebevlies angeordnet ist. Gemäß einer ersten Alternative ist die Trägermaterialschicht aus dem innenseitigen weichen Verkleidungsteil gebildet. Gemäß einer zweiten Alternative ist die Trägermaterialschicht zusätzlich zu dem innenseitigen weichen Verkleidungsteil gebildet, wobei das innenseitige weiche Verkleidungsteil dann zwischen Trägermaterialschicht und außenseitigem Bezugselement angeordnet ist.

Das Klebevlies kann als separate Lage oder Schicht ausgebildet und eingelegt oder auf dem Trägermaterial vorkonfektioniert sein. Das Verkleidungselement ist also als ein separates Bauteil, insbesondere Verbundbauteil oder 3D-Formteil, gefertigt, dessen Deckmaterialzuschnitt oder Deckmaterialschicht mit dem Trägermaterialzuschnitt oder der Trägermaterialschicht mittels des zwischen diesen angeordneten, insbesondere porösen und/oder atmungsaktiven, Klebevlies oder Klebeschicht stoffschlüssig miteinander verbunden ist.

Vorteilhaft ist dabei, dass das Gewicht eines solchen Verkleidungselements besonders gering ist. Zudem kann ein- und dieselbe Presse für verschiedene Deckmaterialien, wie Leder, Vinyl oder Gewebe, verwendet werden. Hierdurch wird die Herstellung des Verkleidungselements in verschiedenen Formen einfacher und kostengünstiger.

Bevorzugt sind dabei ein Deckmaterial der Deckmaterialschicht und ein Trägermaterial der Trägermaterialschicht mittels der Klebeschicht oder des Klebevlieses durch Druckfügeverfahren, insbesondere ein Schweißverfahren, miteinander gefügt. Beispielsweise können das Deckmaterial und das Trägermaterial mittels des Klebevlieses oder der Klebeschicht durch ein Druckumform- und Druckfügeverfahren mittels Hochfrequenzenergie in Form eines elektromagnetischen Feldes (auch kurz Hochfrequenzschweißverfahren genannt) miteinander gefügt sein. Durch ein solches Druckumform- und Druckfügeverfahren wird das/die zwischen der/dem Deckmaterialschicht/-zuschnitt und der/dem Trägermaterialschicht/-zuschnitt angeordnete Klebevlies/-schicht aktiviert. Dabei beeinflussen insbesondere Pressdruck, Schweißleistung, Schweißdauer und Kühldauer die Fügeverbindung zwischen Deckmaterialzuschnitt/-schicht und Trägermaterialzuschnitt/-schicht.

Das Klebevlies weist eine poröse Struktur und somit offene Zwischenräume auf. Das Klebevlies kann als separate Lage zwischen Trägermaterialschicht und Deckmaterialschicht angeordnet sein. Alternativ kann das Klebematerial auf dem Trägermaterial vorkonfektioniert sein. Dabei ist das Klebematerial auf der zum Deckmaterial weisenden Oberflächenseite des Trägermaterials aufgebracht.

Besonders bevorzugt sind das Deckmaterial und das Trägermaterial mittels des Klebevlieses oder der Klebeschicht durch ein Druckumform- und Druckfügeverfahren mittels Hochfrequenzenergie miteinander gefügt.

Bevorzugt ist das Deckmaterial ein laminiertes oder nichtlaminiertes Textilmaterial, insbesondere ein Gewebe oder ein laminiertes oder ein nichtlaminiertes Naturmaterial, insbesondere Leder. Das Deckmaterial ist gegebenenfalls vorbehandelt und liegt beispielsweise als ein Endlosmaterial vor, das zur Herstellung des Verkleidungselements zugeschnitten wird. Ein daraus resultierender Deckmaterialzuschnitt weist eine an eine Endform des Verkleidungselements angepasste Zuschnittform auf. Diese Zuschnittform des Deckmaterials wird auch Deckmaterialzuschnitt genannt. Das Deckmaterial kann verstärkt und/oder beschichtet sein. Auch kann das Deckmaterial glatt oder porig ausgebildet sein. Im Bezug zum Trägermaterial ist das Deckmaterial dünn, wohingegen das Trägermaterial eine größere Dicke aufweist.

Bevorzugt ist das Trägermaterial ein Trägervlies, insbesondere ein Pressfilz oder ein Teppich oder eine Wirkware, beispielsweise aus Kunststofffasern und/oder Naturfasern und/oder Verstärkungsfasern. Das Fasermaterial kann vorgeformt und gegebenenfalls vorbehandelt sein. Das Fasermaterial liegt beispielsweise als ein Endlosmaterial vor, das zur Herstellung des Verkleidungselements zugeschnitten wird. Ein daraus resultierender Trägermaterialzuschnitt weist eine an eine Endform des Verkleidungselements angepasste Zuschnittform auf. Diese Zuschnittform des Trägermaterials wird auch Trägermaterialzuschnitt genannt. Das Fasermaterial kann aus einem oder mehreren verschiedenen Materialien, beispielsweise aus Polyester, Polyethylen, Polypropylen und/oder Polyurethan gebildet sein. Es kann aus wirren Fasern, insbesondere aus recycelten oder nicht-recycelten Natur- und/oder Kunststofffasern, gebildet sein. Das Trägervlies kann aus einem dreidimensional stochastisch orientierten Fasermaterial gebildet sein. Alternativ kann es ein gewebtes oder nichtgewebtes Vlies sein. Es kann optional thermisch vorbehandelt sein. Es handelt sich hierbei vorteilhafterweise um ein dreidimensionales stochastisch orientiertes Fasermaterial. Kunststofffasern sind beispielsweise aus einem Thermoplast gebildet, insbesondere aus einem modifizierten und schweißbaren Thermoplast. Beispielsweise sind die Kunststofffasern aus Polyethylenterephthalat (PET), aus Polyester oder aus einem synthetischen Polymer, insbesondere aus Polylactid (PLA), gebildet. Auch eine Mischung von Fasern aus verschiedenen Kunststoffen ist möglich.

Das Klebevlies ist ein insbesondere wasser- und/oder lösungsfreies Klebstoffvlies, beispielsweise ein Co-Polyester-Vlies oder ein thermoplastisches Vlies. Das Klebevlies weist insbesondere eine offene Struktur auf. Das heißt, es sind hohle Zwischenräume im Klebevlies vorhanden. Bei Aktivierung des Klebevlieses, insbesondere durch Wärme und Druck für eine bestimmte Zeit, bildet sich eine offene Klebeverbindung aus.

Das Verkleidungselement weist bevorzugt eine Dicke in einem Bereich von 2 mm bis 5 mm, insbesondere von 4,0 mm bis 4,5 mm auf.

Ausführungsbeispiele der Erfindung werden anhand von Zeichnungen näher erläutert. Dabei zeigen:
- Figur 1: schematisch in ausschnittsweiser perspektivischer Darstellung eine erste Ausführungsform eines Verkleidungselements eines erfindungsgemäßen Sitzteils in nicht eingebautem Zustand,
- Figur 2: schematisch in perspektivischer Darstellung eine zweite Ausführungsform eines Verkleidungselements eines erfindungsgemäßen Sitzteils in eingebautem Zustand,
- Figur 3A: schematisch im vergrößerter Schnittdarstellung eine dritte Ausführungsform eines Verkleidungselements eines erfindungsgemäßen Sitzteils,
- Figuren 3B bis 3D: schematisch in perspektivischen Darstellungen verschiedene Beispiele für Verkleidungselemente eines nicht erfindungsgemäßen Sitzteils,
- Figur 4: schematisch in Draufsicht ein Beispiel für einen nicht erfindungsgemäßen Deckmaterialzuschnitt,
- Figur 5: schematisch in Draufsicht ein Beispiel für einen nicht erfindungsgemäßen Klebevlieszuschnitt,
- Figur 6: schematisch in Draufsicht ein Beispiel für einen nicht erfindungsgemäßen Trägermaterialzuschnitt,
- Figuren 7A bis 7E: schematisch einen Ablauf eines Verfahrens zur Herstellung eines Verkleidungselements,
- Figur 8: schematisch in perspektivischer Darstellung ein Ausführungsbeispiel für eine Umform- und Fügeeinheit im geöffneten Zustand und
- Figuren 9A bis 9H: schematisch einen Verfahrensablauf zum Aufbringen einer optionalen Tasche auf ein nicht erfindungsgemäßes Verkleidungselement eines nicht erfindungsgemäßen Sitzteils.

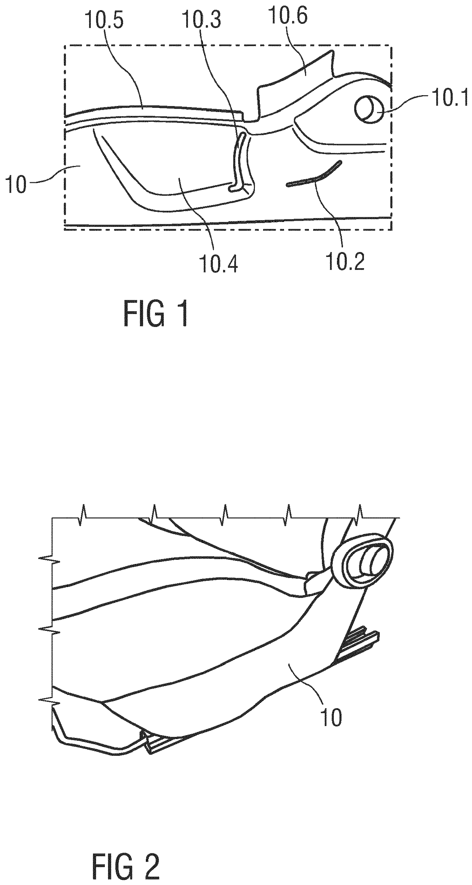

**Figur 1** zeigt eine erste Ausführungsform eines seitlichen Verkleidungselements 10. Das Verkleidungselement 10 dient zu einer seitlichen Verkleidung eines Sitzgestells eines erfindungsgemäßen Sitzteils eines Fahrzeugsitzes und ist aus einem innenseitigen weichen Verkleidungsteil mit einem außenseitig darauf angeordneten Bezugselement gebildet. Bevorzugt ist das Bezugselement mittels einer Anzahl von Nähten an dem innenseitigen weichen Verkleidungsteil befestigt. Alternativ oder zusätzlich ist das Bezugselement mit dem innenseitigen weichen Verkleidungsteil verklebt und/oder geheftet.

Das innenseitige weiche Verkleidungsteil ist bevorzugt aus einem geschäumten Material oder aus einem weichen Kunststoffmaterial gebildet. Besonders bevorzugt ist das innenseitige weiche Verkleidungsteil warmumgeformt, warmgepresst und/oder hochfrequenzumgeformt.

Dadurch, dass auf dem innenseitigen weichen Verkleidungsteil ein Bezugselement, beispielsweise ein Textil, angeordnet ist, erzielt das derart gebildete Verkleidungselement 10 einen sowohl optisch als auch haptisch besonders hochwertigen Eindruck.

Das Verkleidungselement 10 weist eine optionale Durchgangsöffnung 10.1 mit einem nach innen gerichteten Kragen auf, die der Durchführung eines Bauteils für eine Sitzlehnenverstellung dient. Das Verkleidungselement 10 weist zudem eine optionale schlitzförmige erste Ausnehmung 10.2 auf, die beispielsweise zur Durchführung eines Bestandteils eines Insassenrückhaltesystems, wie eines Gurtschlosses, dient. Das Verkleidungselement 10 weist zudem eine optionale, schlitzförmige zweite Ausnehmung 10.3 auf, die beispielsweise zur Durchführung eines Bauteils für eine Sitzhöhenverstellung dient, welches in einer Vertiefung 10.4 des Verkleidungselements 10 positionierbar ist.

Ein optionaler, oberseitig auskragender erster Randbereich 10.5 des Verkleidungselements 10 dient bevorzugt zu dessen Befestigung an einer Tragkonstruktion des Fahrzeugsitzes, also am Sitzgestell des Fahrzeugsitzes. Ein optionaler, oberseitig auskragender zweiter Randbereich 10.6 des Verkleidungselements 10 dient ebenfalls bevorzugt zu dessen Befestigung an der Tragkonstruktion des Fahrzeugsitzes.

Diese Befestigung kann zumindest abschnittsweise unmittelbar am Sitzgestell erfolgen. Zusätzlich oder optional kann diese Befestigung am Sitzgestell auch zumindest abschnittsweise mittelbar erfolgen, beispielsweise dadurch, dass jeweils abstehende Randbereiche (10.5, 10.6) von einem Sitzpolster des Sitzteils überfangen und/oder von diesem eingeklemmt und/oder an diesem befestigt werden.

**Figur 2** zeigt in perspektivischer Ansicht ausschnittsweise einen Fahrzeugsitz mit einer zweiten Ausführungsform eines montierten seitlichen Verkleidungselements 10.

Das Verkleidungselement 10 dient ebenfalls zu einer seitlichen Verkleidung eines Sitzgestells eines erfindungsgemäßen Sitzteils eines Fahrzeugsitzes und ist aus einem innenseitigen weichen Verkleidungsteil mit einem außenseitig darauf angeordnetem Bezugselement gebildet. Bevorzugt ist auch hier das Bezugselement mittels einer Anzahl von Nähten an dem innenseitigen weichen Verkleidungsteil befestigt. Alternativ ist auch hier das Bezugselement mit dem innenseitigen weichen Verkleidungsteil verklebt und/oder geheftet.

Das innenseitige weiche Verkleidungsteil ist bevorzugt aus einem geschäumten Material oder aus einem weichen Kunststoffmaterial gebildet, besonders bevorzugt ist das innenseitige weiche Verkleidungsteil warmumgeformt, warmgepresst und/oder hochfrequenzumgeformt.

Dadurch, dass auf dem innenseitigen weichen Verkleidungsteil ein Bezugselement, beispielsweise ein Textil, angeordnet ist, erzielt das gezeigte Verkleidungselement 10 einen sowohl optisch als auch haptisch besonders hochwertigen Eindruck. Im Stand der Technik bekannte Verkleidungselemente, deren Oberfläche aus Plastik visuell erkennbar ist und als nicht hochwertig aufgefasst wird oder in Stand der Technik bekannte Verkleidungselemente, die zwar einen optisch ansprechenden Bezug aufweisen, aber vergleichsweise hart sind und erkennen lassen, dass ein vergleichsweise hartes Kunststoffteil lediglich mit einem Bezug versehen wurden, sind durch Verkleidungselemente 10 des erfindungsgemäßen Sitzteils ersetzbar.

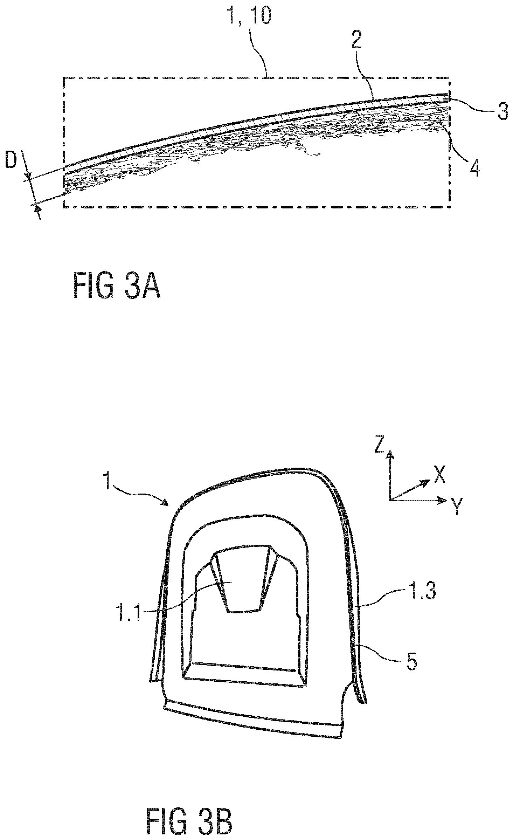

**Figur 3A** zeigt schematisch im vergrößerten Vertikalschnitt einen Bereich eines Verkleidungselements 1, 10. Das Verkleidungselement 1, 10 dient entweder als Verkleidungselement 10 zu einer seitlichen Verkleidung eines Sitzgestells eines erfindungsgemäßen Sitzteils eines Fahrzeugsitzes oder als Verkleidungselement 1 zu einer nicht erfindungsgemäßen rückseitigen Verkleidung einer Sitzlehne eines Fahrzeugsitzes.

Das Verkleidungselement 1, 10 ist geformt aus einer Deckmaterialschicht 2 als Bezugselement, einem optionalen Klebevlies 3 oder Klebeschicht und einer Trägermaterialschicht 4, die bevorzugt das innenseitige weiche Verkleidungsteil bildet.

Das Klebevlies 3 kann als eine separate Lage ausgebildet sein. Alternativ kann ein Klebematerial oder -stoff auf der Trägermaterialschicht 4 als eine Klebeschicht aufgebracht oder vorkonfektioniert sein. Nachfolgend wird die Erfindung anhand eines separaten Klebevlieses 3 beschrieben. Die Erfindung ist analog für eine mit einer Klebeschicht vorkonfektionierten Trägermaterialschicht 4 anwendbar.

Das Klebevlies 3 ist zwischen der Deckmaterialschicht 2 und der Trägermaterialschicht 4 angeordnet. Mittels des Klebevlieses 3 sind die Deckmaterialschicht 2 und die Trägermaterialschicht 4 miteinander gefügt, insbesondere stoffschlüssig miteinander verbunden. Das Verkleidungselement 1, 10 ist somit als ein Verbundbauteil gefertigt.

Dabei kann die Deckmaterialschicht 2 dünn ausgebildet sein; wohingegen die Trägermaterialschicht 4 im Vergleich zur Deckmaterialschicht 2 dick ausgebildet sein kann. Mit anderen Worten: Die Deckmaterialschicht 2 weist eine kleinere Dicke als die Trägermaterialschicht 4 auf.

Das Verkleidungselement 1, 10 weist bevorzugt eine Dicke D in einem Bereich von 3 mm bis 5 mm, insbesondere von 4,0 mm bis 4,5 mm, auf und ist somit gegenüber herkömmlichen Verkleidungselementen mit Dicken von größer 5 mm oder 8 mm deutlich dünner ausgebildet.

Darüber hinaus kann das Verkleidungselement 1, 10 eine Härte von größer 60 Shore-A, insbesondere von 65 Shore-A bei einem 1000 g Trägermaterialzuschnitt 4.1 (insbesondere einem 1000 g Trägervlies) oder von 62 Shore-A bei einem 800 g Trägermaterialzuschnitt 4.1 (insbesondere einem 800 g Trägervlies) aufweisen.

**Figuren 3B bis 3D** zeigen schematisch in perspektivischen Darstellungen verschiedene Beispiele für ein gefertigtes Verkleidungselement 1 zu einer nicht erfindungsgemäßen rückseitigen Verkleidung einer Sitzlehne eines Fahrzeugsitzes.

**Figur 3B** zeigt eine Rückseite eines Verkleidungselements 1, das als eine schalenförmiges Lehnenabdeckung oder ein Lehnenpolsterelement geformt ist. Die Rückseite des Verkleidungselements 1 weist eine Vertiefung 1.1 auf. Die Vertiefung 1.1 wird während der Herstellung des Verkleidungselements 1 in dieses eingeformt. Die Vertiefung 1.1 dient beispielsweise einer Beinfreiheit.

Entlang einer umlaufenden Kante 1.3 kann das Verkleidungselement 1 ein Befestigungsmittel 5, insbesondere einen Reißverschluss für einen anzubringenden Bezug, aufweisen.

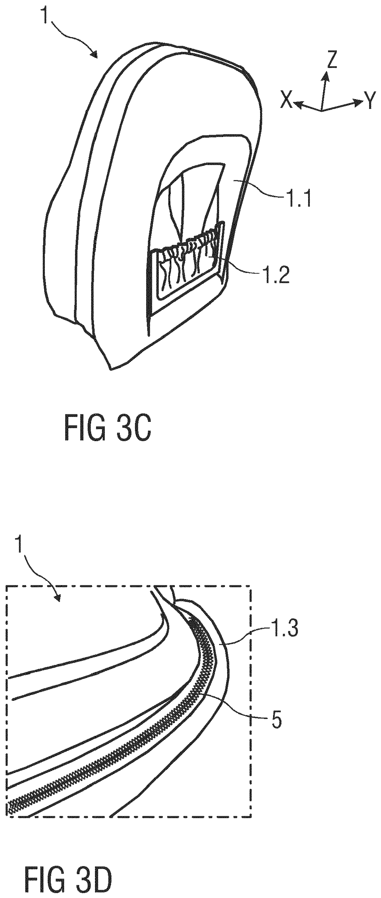

**Figur 3C** zeigt ein weiteres Ausführungsbeispiel für eine Rückseite des Verkleidungselements 1, das als eine Lehnenabdeckung oder ein schalenförmiges Lehnenpolsterelement geformt ist. Die Rückseite des Verkleidungselements 1 weist zusätzlich in der Vertiefung 1.1 eine Tasche 1.2 auf. Die Tasche 1.2 kann einfach in der Vertiefung 1.1 lösbar fixiert sein. Die Tasche 1.2 ist optional.

**Figur 3D** zeigt die umlaufende Kante 1.3 des Verkleidungselements 1 in vergrößerter Darstellung.

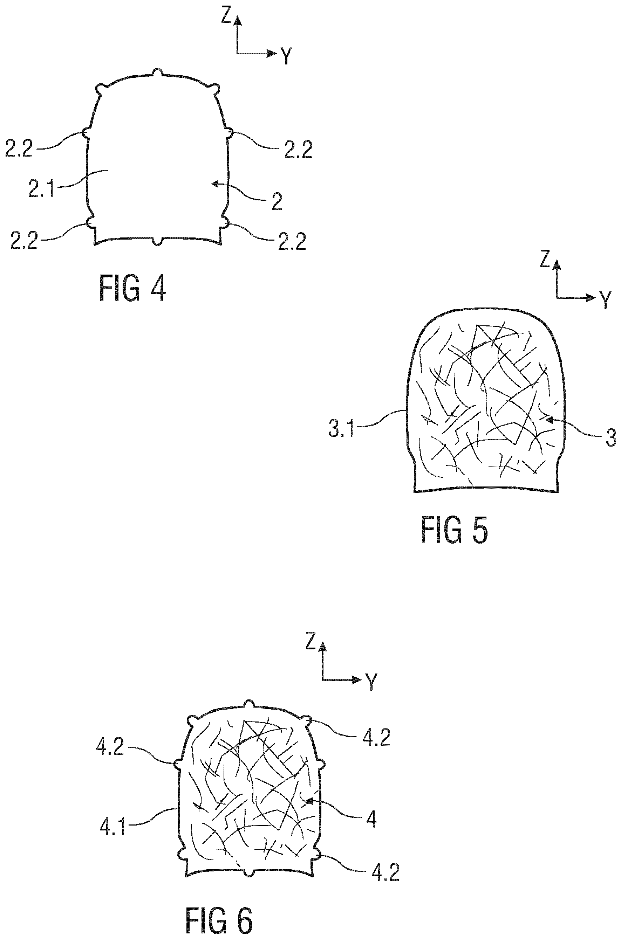

**Figur 4** zeigt schematisch in Draufsicht ein Beispiel für einen Deckmaterialzuschnitt 2.1 der Deckmaterialschicht 2 für das nicht erfindungsgemäß vorgesehene Verkleidungselement 1.

Das Deckmaterial der Deckmaterialschicht 2 ist beispielsweise ein Vinylmaterial, insbesondere ein nicht-laminiertes Vinylmaterial. Beispielsweise kann das Deckmaterial ein Polyvinylchlorid sein. Alternativ kann das Deckmaterial ein Textilmaterial, insbesondere ein Gewebe oder ein Naturmaterial, insbesondere Leder, sein. Das Deckmaterial ist gegebenenfalls vorbehandelt. Das Deckmaterial liegt insbesondere als ein Endlosmaterial vor. Zur Herstellung des Verkleidungselements 1 wird das Deckmaterial korrespondierend zur Endform des Verkleidungselements 1 als Deckmaterialzuschnitt 2.1 zugeschnitten. Das Deckmaterial kann verstärkt und/oder beschichtet sein. Auch kann das Deckmaterial glatt oder porig ausgebildet sein.

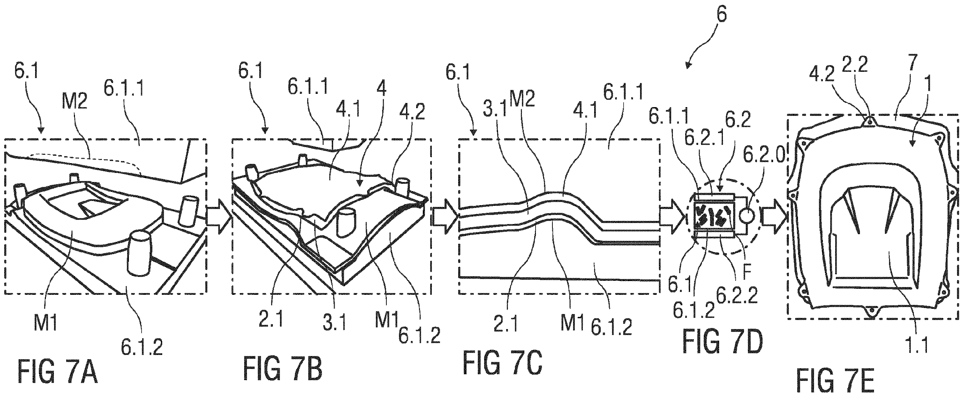

Dabei kann der Deckmaterialzuschnitt 2.1 entlang seiner Außenkontur abragende Zungen 2.2 oder andere geeignete Befestigungslaschen aufweisen. Diese Zungen 2.2 dienen nach Fertigung des Verkleidungselements 1 für einen Sitz, wie einen Fahrzeugsitz, beispielsweise zum Befestigen eines in Figur 7E dargestellten Sitzbezuges 7 (trim cover).

**Figur 5** zeigt schematisch in Draufsicht ein Beispiel für einen Klebevlies 3. Das Klebevlies 3 liegt insbesondere als ein Endlosmaterial vor. Zur Herstellung des Verkleidungselements 1 wird das Klebevlies 3 korrespondierend zur Endform des Verkleidungselements 1 als Klebevlieszuschnitt 3.1 zugeschnitten.

Dabei weist der Klebevlieszuschnitt 3.1 insbesondere eine zu dem Deckmaterialzuschnitt 2.1 und dem Trägermaterialzuschnitt 4.1 korrespondierende Form auf. Insbesondere sind die Abmessungen und/oder die Größe des Klebevlieszuschnitts 3.1 weitgehend gleich mit den Abmessungen und/oder der Größe des Deckmaterialzuschnitts 2.1 und/oder des Trägermaterialzuschnitts 4.1. Der Klebevlieszuschnitt 3.1 weist eine glatte Kontur ohne Zungen oder Laschen auf. Die Form des Klebevlieszuschnitts 3.1 entspricht dabei im Wesentlichen der kleineren Form des Deckmaterialzuschnitts 2.1 oder des Trägermaterialzuschnitts 4.1, für den Fall, dass einer dieser kleiner ausgebildet ist.

Das Klebevlies 3 ist insbesondere ein wasser- und/oder lösungsfreies Klebstoffvlies, beispielsweise ein Co-Polyester-Vlies oder ein thermoplastisches Vlies. Das Klebevlies 3 weist insbesondere eine offene Struktur auf. Das Klebevlies 3 ist durch Hohlräume gekennzeichnet. Bei Aktivierung, insbesondere durch Wärme und Druck für eine bestimmte Zeit, bildet sich dadurch eine offene Klebeverbindung zwischen den zu fügenden Deckmaterial- und Trägermaterialschichten 2 bzw. 4 aus. Hierdurch kann das endgefertigte Verkleidungselement 1 als Verbundbauteil atmungsaktiv ausgebildet sein.

**Figur 6** zeigt schematisch in Draufsicht ein Beispiel für einen Trägermaterialzuschnitt 4.1 der Trägermaterialschicht 4.

Das Trägermaterial liegt insbesondere als ein Endlosmaterial vor. Zur Herstellung des Verkleidungselements 1 wird das Trägermaterial der Trägermaterialschicht 4 korrespondierend zur Endform des Verkleidungselements 1 als Trägermaterialzuschnitt 4.1 zugeschnitten.

Dabei kann der Trägermaterialzuschnitt 4.1 entlang seiner Außenkontur abragende Zungen 4.2 oder andere geeignete Befestigungslaschen aufweisen. Diese Zungen 4.2 dienen nach Fertigung des Verkleidungselements 1 beispielsweise zum Befestigen des Sitzbezuges 7 (trim cover).

Das Trägermaterial ist insbesondere als ein Trägervlies, beispielsweise ein Pressfilz oder ein Teppich oder eine Wirkware, ausgebildet. Das Trägervlies ist beispielsweise aus Kunststofffasern und/oder Naturfasern und/oder Verstärkungsfasern gebildet. Das Fasermaterial kann vorgeformt und gegebenenfalls vorbehandelt sein. Das Fasermaterial kann aus einem oder mehreren verschiedenen Materialien, beispielsweise aus Polyester, Polyethylen, Polypropylen und/oder Polyurethan gebildet sein. Es kann aus wirren Fasern, insbesondere aus recycelten oder nicht-recycelten Natur- und/oder Kunststofffasern, gebildet sein. Das Trägervlies kann aus einem dreidimensional, stochastisch orientierten Fasermaterial gebildet sein. Alternativ kann es ein gewebtes oder nichtgewebtes Trägervlies sein. Es kann optional thermisch vorbehandelt sein. Es handelt sich hierbei vorteilhafterweise um ein dreidimensionales, stochastisch orientiertes Fasermaterial. Kunststofffasern sind beispielsweise aus einem Thermoplast gebildet, insbesondere aus einem modifizierten und schweißbaren Thermoplast. Beispielsweise sind die Kunststofffasern aus Polyethylenterephthalat (PET), aus Polyester oder aus einem synthetischen Polymer, insbesondere aus Polylactid (PLA), gebildet. Auch eine Mischung von Fasern aus verschiedenen Kunststoffen ist möglich.

**Figuren 7A bis 7E** zeigen schematisch einen Ablauf eines Verfahrens zur Herstellung eines Verkleidungselements 1, 10. Einige der Verfahrensschritte zeigen zwar ein Verkleidungselement 1 zur nicht erfindungsgemäßen Verkleidung einer Rückenlehne, sind aber in analoger Weise auch zur Herstellung eines Verkleidungselements 10 für ein erfindungsgemäßes Sitzteil möglich.

Zur Herstellung des Verkleidungselements 1, 10 ist eine Umform- und Fügeeinheit 6 vorgesehen, die in den Figuren 7A bis 7D teilweise dargestellt ist.

**Figur 7A** zeigt teilweise eine Umformeinheit 6.1 der Umform- und Fügeeinheit 6. Die Umformeinheit 6.1 ist beispielsweise als eine Presse, insbesondere eine Umformpresse, ausgebildet. Die Presse kann insbesondere als eine elektrische, hydraulische oder pneumatische Presse ausgebildet sein.

Die Umformeinheit 6.1 umfasst zumindest ein negatives Formteil 6.1.1 und ein positives Formteil 6.1.2. Im Ausführungsbeispiel ist das negative Formteil 6.1.1 ein oberes Formteil, insbesondere ein negatives Pressformteil. Das positive Formteil 6.1.2 ist beispielsweise ein unteres Formteil, beispielsweise ein positives Pressformteil.

Das positive Formteil 6.1.2 weist eine Matrize M1 auf, die der zu bildenden Endform des Verkleidungselements 1, 10 entspricht. Das negative Formteil 6.1.1 weist eine zu der Matrize M1 korrespondierende negative Matrize M2 auf. Mit anderen Worten: Das negative Formteil 6.1.1 und das positive Formteil 6.1.2 weisen eine einer Endform, insbesondere 3D-Form, beispielsweise eine Schalenform, des Verkleidungselements 1, 10 entsprechende negative bzw. positive Matrizenform M2 bzw. M1 auf.

Die Umformeinheit 6.1 ist im geöffneten Zustand gezeigt. Das heißt, die Formteile 6.1.1 und 6.1.2 sind voneinander beabstandet angeordnet. Hierdurch ist ein Beladen oder Einführen der Zuschnitte, d.h. des Deckmaterialzuschnitts 2.1, des Klebevlieszuschnitts 3.1 und des Trägermaterialzuschnitts 4.1 in die Umformeinheit 6.1 ermöglicht.

In einem alternativen, nicht näher dargestellten Ausführungsbeispiel einer auf dem Trägermaterialzuschnitt 4.1 vorkonfektionierten Klebeschicht wird der Trägermaterialzuschnitt 4.1 mit der vorkonfektionierten Klebeschicht derart in die Umformeinheit 6.1 eingebracht, dass die Klebeschicht in Richtung des Deckmaterialzuschnitts 2.1 weist und im positionierten Zustand zwischen Deckmaterialzuschnitt 2.1 und Trägermaterialzuschnitt 4.1 angeordnet ist.

Die Formteile 6.1.1 und 6.1.2 sind insbesondere aus Aluminium gebildet. Hierdurch können unabhängig vom verwendeten Material (Gewebe oder Leder) Verkleidungselemente 1, 10 aus verschiedenen Materialien in ein- und derselben Umformeinheit 6.1 geformt und hergestellt werden.

**Figur 7B** zeigt die geöffnete Umformeinheit 6.1 mit auf dem positiven Formteil 6.1.2 übereinander angeordneten Zuschnitten - Deckmaterialzuschnitt 2.1, Klebevlieszuschnitt 3.1 und Trägermaterialzuschnitt 4.1. Insbesondere sind die Zuschnitte in Lagen und beispielsweise in der Art eines Sandwiches übereinander angeordnet und zueinander ausgerichtet.

**Figur 7C** zeigt die Umformeinheit 6.1 im geschlossenen Zustand und mit den zwischen den Formteilen 6.1.1 und 6.1.2 angeordneten Zuschnitten - Deckmaterialzuschnitt 2.1, Klebevlieszuschnitt 3.1 und Trägermaterialzuschnitt 4.1.

**Figur 7D** zeigt eine Fügeeinheit 6.2 der Umform- und Fügeeinheit 6.

Die Fügeeinheit 6.2 ist insbesondere ein Generator 6.2.0. Der Generator 6.2.0 ist insbesondere ein Hochfrequenz-Generator, der ein elektromagnetisches Feld F im Bereich der zu fügenden Zuschnitte, wie Deckmaterialzuschnitt 2.1, Klebevlieszuschnitt 3.1 und Trägermaterialzuschnitt 4.1, erzeugt, um diese mittels Reibungswärme von bewegten Molekülen miteinander zu fügen.

Hierzu ist der Generator 6.2.0 mit der Umformeinheit 6.1 zum Druckumform- und Druckfügeverfahren des Deckmaterialzuschnitts 2.1 und des Trägermaterialzuschnitts 4.1 mittels des Klebevlieszuschnitts 3.1 zur Herstellung des Verkleidungselements 1, 10 gekoppelt.

Der Generator 6.2.0 umfasst beispielsweise zwei Elektroden 6.2.1 und 6.2.2, die jeweils mit einem der Formteile 6.1.1 bzw. 6.1.2 der Umformeinheit 6.1 gekoppelt sind. Dabei können die Formteile 6.1.1 und 6.1.2 selbst die Elektroden 6.2.1 bzw. 6.2.2 bilden. Alternativ können die Elektroden 6.2.1 und 6.2.2 separat ausgebildet sein und in die Formteile 6.1.1 bzw. 6.1.2 integriert sein.

Der Generator 6.2.0, insbesondere ein Hochfrequenz-Generator, erzeugt das elektromagnetische Feld F zwischen den zwei Elektroden 6.2.1 und 6.2.2, beispielsweise mit einer Hochfrequenz in einem Bereich von größer 20 MHz, insbesondere von 25 MHz oder 27 MHz. Dabei wird Wärme, auch Schweißwärme genannt, durch Molekularschwingungen (Reibungswärme) direkt in den miteinander zu fügenden, insbesondere zu schweißenden Materialien, insbesondere in die Zuschnitte, wie Deckmaterialzuschnitt 2.1, Klebevlieszuschnitt 3.1 und Trägermaterialzuschnitt 4.1, erzeugt. Dabei kommt es zu einer Aktivierung des Klebstoffs oder Klebmaterials des Klebevlieszuschnitts 3.1 oder der Klebeschicht und zu einem Aufschmelzen und Verschmelzen dieses/dieser mit dem Deckmaterial der Deckmaterialschicht 2 und dem Trägermaterial der Trägermaterialschicht 4, wodurch diese miteinander gefügt werden.

Eine Erwärmung der Umformeinheit 6.1, insbesondere deren Formteile 6.1.1, 6.1.2, und/oder von Deckmaterial, Trägermaterial und/oder Klebstoff vor und/oder während des Fügens der Schichten ist nicht erforderlich. Hierdurch kann das Verkleidungselement 1, 10 einfach und kostengünstig in verschiedenen Materialvariationen mit ein- und derselben Umform- und Fügeeinheit 6 hergestellt werden.

**Figur 7E** zeigt das geformte Verkleidungselement 1 mit den Zungen 2.2 und 4.2 zur Befestigung des Verkleidungselements 1 mit dem Sitzbezug 7 nach Entnahme des Verkleidungselements 1 aus der Umform- und Fügeeinheit 6.

Ein Verfahren zur Herstellung des Verkleidungselements 1, 10 umfasst zusammenfassend zumindest folgende Schritte:
- Öffnen der Umform- und Fügeeinheit 6 (Figur 7A),
- Positionieren des Deckmaterialzuschnitts 2.1, des Klebevlieszuschnitts 3.1 und des Trägermaterialzuschnitts 4.1 in die geöffnete Umform- und Fügeeinheit 6, zum Beispiel auf dem positiven Formteil 6.1.2 (Figur 7B),
- Schließen der Umform- und Fügeeinheit 6.1, zum Beispiel durch Bewegen des negativen Formteils 6.1.1 in Richtung des positiven Formteils 6.1.2 (Figur 7C),
- Fügen des Deckmaterialzuschnitts 2.1 mit dem Trägermaterialzuschnitt 4.1 mittels des Klebevlieses 3 oder der Klebeschicht durch Schweißen und Formen des Verkleidungselements 1, 10 1 durch Druckumformen (Figur 7D), und
- Öffnen der Umform- und Fügeeinheit 6 und Entnehmen des geformten Verkleidungselements 1, 10 (Figur 7E).

Dabei können die/der Deckmaterialschicht (2) /-zuschnitt 2.1 mit der/dem Trägermaterialschicht (4) /-zuschnitt 4.1 mittels der/dem Klebeschicht/- vlieszuschnitt 3.1, beispielsweise durch Hochfrequenzschweißen, miteinander gefügt werden. Hierzu wird beispielsweise ein, insbesondere elektromagnetisches Feld F im Bereich der Füge- oder Nahtstelle der zu fügenden Materialien erzeugt, wobei diese Materialschichten durch Druckpressen des negativen Formteils 6.1.1 auf das positive Formteil 6.1.2 oder umgekehrt miteinander mittels der aktivierten Klebeschicht oder des Klebevlieszuschnitts 3.1 in die Endform des Verkleidungselements 1, 10 gefügt und geformt, insbesondere druckumgeformt, werden.

Das gefertigte und endgeformte Verkleidungselement 1 kann dann beispielsweise mit dem Sitzbezug 7 vernäht oder mittels eines Reißverschlusses verbunden werden. Das Verkleidungselement 1, 10 kann separat oder zusammen mit dem Sitzbezug 7 auf den Sitz, insbesondere ein Polsterelement oder einen Sitzträger aufgebracht und befestigt werden.

Das Verkleidungselement 1, 10 kann ein Teil einer Sitzkomponente sein und beispielsweise eine Seitenfläche eines Sitzgestells eines Fahrzeugsitzes oder eine Sitzlehnenfläche verkleiden/abdecken.

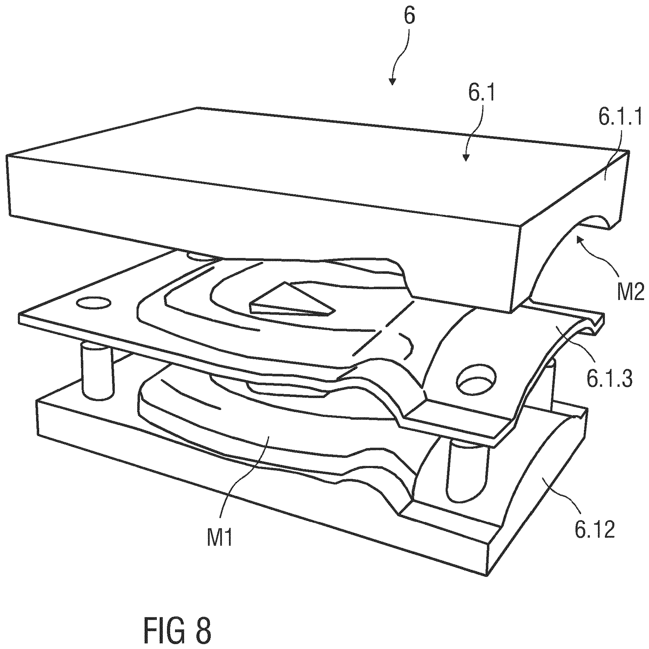

**Figur 8** zeigt schematisch in perspektivischer Darstellung ein Ausführungsbeispiel für die Umform- und Fügeeinheit 6 im geöffneten Zustand. Die Umform- und Fügeeinheit 6 kann zusätzlich einen Fixierungsrahmen 6.1.3 aufweisen, um die Zuschnitte, wie Deckmaterialzuschnitt 2.1, Klebevlieszuschnitt 3.1 und Trägermaterialzuschnitt 4.1, in der Umform- und Fügeeinheit 6 zu positionieren, zueinander auszurichten und zu fixieren.

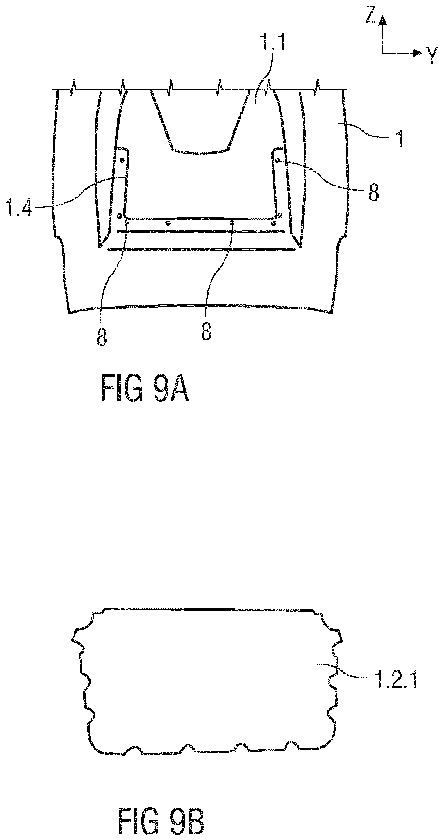

**Figuren 9A bis 9H** zeigen schematisch einen Verfahrensablauf zum Aufbringen einer optionalen Tasche 1.2 auf das Verkleidungselement 1. Die gezeigten Verfahrensschritte sind in analoger Abfolge auch durchführbar, um eine Tasche 1.2 auf ein Verkleidungselement 10 eines erfindungsgemäßen Sitzteils aufzubringen.

Beim Formen und Fügen des beispielhaften Verkleidungselements 1 nach Figuren 9A bis 9H in der Umform- und Fügeeinheit 6 werden in dieses Verkleidungselement 1 Befestigungsöffnungen 8 eingefügt oder -geformt. Optional kann in die eingeformte Vertiefung 1.1 ein Absatz 1.4 eingeformt sein. Alternativ können die Befestigungsöffnungen 8 und/oder der Absatz 1.4 nachträglich in das bereits geformte und gefügte

Verkleidungselement 1 (wie oben anhand der Figuren 7A bis 7E beschrieben) eingebracht werden.

**Figur 9A** zeigt beispielhaft ein Verkleidungselement 1 mit Befestigungsöffnungen 8 und dem Absatz 1.4 im Bereich der Vertiefung 1.1.

**Figur 9B** zeigt beispielhaft einen Taschenmaterialzuschnitt 1.2.1.

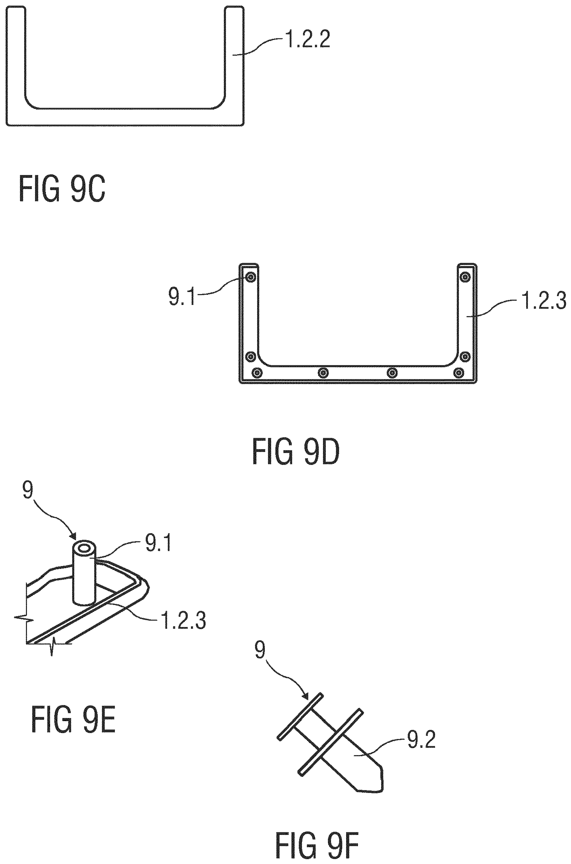

**Figur 9C** zeigt ein Beispiel für einen Befestigungsrahmen 1.2.2 von seiner Außenseite (auch Blendrahmen genannt) für die Tasche 1.2.

**Figur 9D** zeigt ein Beispiel für eine Innenseite 1.2.3 (auch Befestigungsseite genannt) des Befestigungsrahmens 1.2.2 für die Tasche 1.2.

**Figuren 9E und 9F** zeigen Beispiele für Befestigungsmittel 9, insbesondere einen Befestigungsstift 9.1 bzw. eine Befestigungsniete 9.2 oder -schrauben.

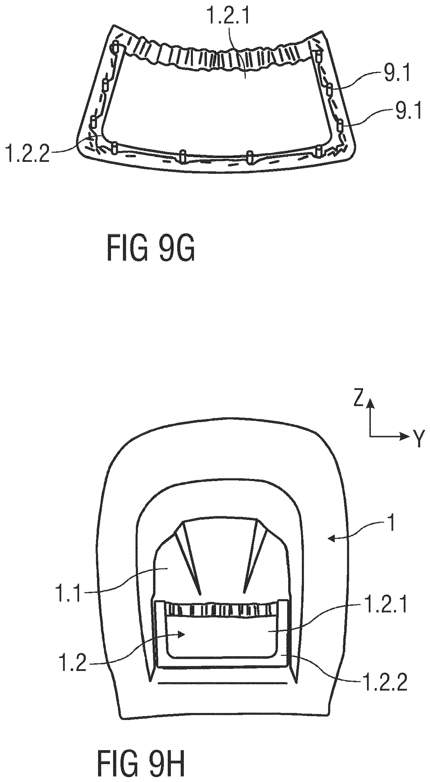

**Figur 9G** zeigt ein Beispiel für die Tasche 1.2 deren Taschenmaterialzuschnitt 1.2.1 mittels des Befestigungsrahmens 1.2.2 an dem Verkleidungselement 1 befestigt ist. Dabei kann der Befestigungsrahmen 1.2.2 vom Trägermaterial nach außen nicht sichtbar verdeckt sein, wie in Figur 9G gezeigt.

**Figur 9H** zeigt ein alternatives Beispiel mit von außen sichtbarem Befestigungsrahmen 1.2.2 im an dem Verkleidungselement 1 befestigten, insbesondere gesteckten oder genieteten, Zustand.

### Bezugszeichenliste

- 1: Verkleidungselement
- 1.1: Vertiefung
- 1.2: Tasche
- 1.2.1: Taschenmaterialzuschnitt
- 1.2.2: Befestigungsrahmen
- 1.2.3: Innenseite
- 1.3: Kante
- 1.4: Absatz
- 2: Deckmaterialschicht
- 2.1: Deckmaterialzuschnitt
- 2.2: Zunge
- 3: Klebevlies
- 3.1: Klebevlieszuschnitt
- 4: Trägermaterialschicht
- 4.1: Trägermaterialzuschnitt
- 4.2: Zunge
- 5: Befestigungsmittel
- 6: Umform- und Fügeeinheit
- 6.1: Umformeinheit
- 6.1.1: negatives Formteil
- 6.1.2: positives Formteil
- 6.1.3: Fixierungsrahmen
- 6.2: Fügeeinheit
- 6.2.0: Generator
- 6.2.1: Elektrode
- 6.2.2: Elektrode
- 7: Sitzbezug
- 8: Befestigungsöffnung
- 9: Befestigungsmittel
- 9.1: Befestigungsstift
- 9.2: Befestigungsniete
- 10: Verkleidungselement
- 10.1: Durchgangsöffnung
- 10.2: erste Ausnehmung
- 10.3: zweite Ausnehmung
- 10.4: Vertiefung
- 10.5: erster Randbereich
- 10.6: zweiter Randbereich

- D: Dicke
- F: elektromagnetisches Feld
- M1, M2: Matrizen

## Patentansprüche

1. Sitzteil eines Fahrzeugsitzes, wobei das Sitzteil ein Sitzgestell aufweist,
**gekennzeichnet durch** ein am Sitzgestell seitlich angeordnetes Verkleidungselement (1, 10) zur Verkleidung, aufweisend ein innenseitiges weiches Verkleidungsteil und ein außenseitig darauf angeordnetes Bezugselement,
wobei das Verkleidungselement (1, 10) eine Anzahl von jeweils abstehenden Randbereichen (10.5, 10.6) zur Befestigung an dem Sitzgestell aufweist.

2. Sitzteil nach Anspruch 1,
**dadurch gekennzeichnet, dass** das Bezugselement mittels einer Anzahl von Nähten an dem innenseitigen weichen Verkleidungsteil befestigt ist.

3. Sitzteil nach Anspruch 1 oder 2,
**dadurch gekennzeichnet, dass** das Bezugselement mit dem innenseitigen weichen Verkleidungsteil verklebt ist.

4. Sitzteil nach einem der vorhergehenden Ansprüche,
**dadurch gekennzeichnet, dass** das Bezugselement mit dem innenseitigen weichen Verkleidungsteil geheftet ist.

5. Sitzteil nach einem der vorhergehenden Ansprüche,
**dadurch gekennzeichnet, dass** das innenseitige weiche Verkleidungsteil aus einem geschäumten Material oder aus einem weichen Kunststoffmaterial gebildet ist.

6. Sitzteil nach Anspruch 5,
**dadurch gekennzeichnet, dass** das innenseitige weiche Verkleidungsteil warmumgeformt ist.

7. Sitzteil nach einem der vorhergehenden Ansprüche,
**gekennzeichnet durch** eine Anzahl von Durchgangsöffnungen (10.1) und/oder durch eine Anzahl von Ausnehmungen (10.2, 10.3).

8. Sitzteil nach einem der vorhergehenden Ansprüche, **dadurch gekennzeichnet, dass** das Bezugselement eine Deckmaterialschicht (2), insbesondere ein Deckmaterialzuschnitt (2.1) ist und dass eine Trägermaterialschicht (4), insbesondere ein Trägermaterialzuschnitt (4.1) vorgesehen ist und dass zwischen der Deckmaterialschicht (2) und der Trägermaterialschicht (4) eine Klebeschicht, insbesondere ein Klebevlies (3) angeordnet ist.

9. Sitzteil nach Anspruch 8, wobei ein Deckmaterial der Deckmaterialschicht (2) und ein Trägermaterial der Trägermaterialschicht (4) mittels der Klebeschicht oder des Klebevlieses (3) durch ein Druckumform- und Druckfügeverfahren miteinander gefügt sind.

10. Sitzteil nach Anspruch 8 oder 9, wobei das Deckmaterial und das Trägermaterial mittels des Klebevlieses (3) oder der Klebeschicht durch ein Druckumform- und Druckfügeverfahren mittels Hochfrequenzenergie miteinander gefügt sind.

11. Sitzteil nach einem der Ansprüche 8 bis 10, wobei das Deckmaterial ein Vinylmaterial, ein Textilmaterial oder ein Naturmaterial ist.

12. Sitzteil nach einem der Ansprüche 8 bis 11, wobei das Trägermaterial ein Trägervlies, insbesondere ein Pressfilz oder -vlies, ist.

13. Sitzteil nach einem der Ansprüche 8 bis 12, wobei das Klebevlies (3) ein Co-Polyester-Vlies oder ein thermoplastisches Vlies ist.

14. Fahrzeugsitz, umfassend eine Sitzlehne und ein Sitzteil, wobei das Sitzteil ein Sitzpolster mit einem Bezug sowie ein Sitzgestell umfasst, **gekennzeichnet durch** ein Sitzteil nach einem der vorhergehenden Ansprüche.

## Claims

1. Seat part of a vehicle seat, wherein the seat part has a seat frame,
**characterized by** a lining element (1, 10) which is arranged laterally on the seat frame for lining purposes, having an inner soft lining part and a cover element arranged thereon on the outer side, wherein the lining element (1, 10) has a number of respectively protruding peripheral regions (10.5, 10.6) for fastening to the seat frame.

2. Seat part according to Claim 1,
**characterized in that** the cover element is fastened to the inner soft lining part by means of a number of seams.

3. Seat part according to Claim 1 or 2,
**characterized in that** the cover element is adhesively bonded to the inner soft lining part.

4. Seat part according to one of the preceding claims,
**characterized in that** the cover element is stapled to the inner soft lining part.

5. Seat part according to one of the preceding claims,
**characterized in that** the inner soft lining part is formed from a foamed material or from a soft plastics material.

6. Seat part according to Claim 5,
**characterized in that** the inner soft lining part is hot-formed.

7. Seat part according to one of the preceding claims,
**characterized by** a number of passage openings (10.1) and/or by a number of cutouts (10.2, 10.3).

8. Seat part according to one of the preceding claims,
**characterized in that** the cover element is an outer material layer (2), in particular an outer material blank (2.1), and **in that** a carrier material layer (4), in particular a carrier material blank (4.1), is provided, and **in that** an adhesive layer, in particular an adhesive nonwoven (3), is arranged between the outer material layer (2) and the carrier material layer (4).

9. Seat part according to Claim 8, wherein an outer material of the outer material layer (2) and a carrier material of the carrier material layer (4) are joined to one another by means of the adhesive layer or the adhesive nonwoven (3) by a pressure-forming and pressure-joining method.

10. Seat part according to Claim 8 or 9, wherein the outer material and the carrier material are joined to one another by means of the adhesive nonwoven (3) or the adhesive layer by a pressure-forming and pressure-joining method by means of highfrequency energy.

11. Seat part according to one of Claims 8 to 10, wherein the outer material is a vinyl material, a textile material or a natural material.

12. Seat part according to one of Claims 8 to 11, wherein the carrier material is a carrier nonwoven, in particular a press felt or press nonwoven.

13. Seat part according to one of Claims 8 to 12, wherein the adhesive nonwoven (3) is a co-polyester nonwoven or a thermoplastic nonwoven.

14. Vehicle seat, comprising a seat backrest and a seat part, wherein the seat part comprises a seat cushion with a cover, and also a seat frame, **characterized by** a seat part according to one of the preceding claims.

## Revendications

1. Partie de siège d'un siège de véhicule, la partie de siège comprenant un cadre de siège,
**caractérisée par** un élément d'habillage (1, 10) agencé latéralement sur le cadre de siège pour l'habillage, comprenant une partie d'habillage souple côté intérieur et un élément de revêtement agencé sur celle-ci côté extérieur,
l'élément d'habillage (1, 10) comprenant un nombre de zones de bord (10.5, 10.6) respectivement saillantes pour la fixation au cadre de siège.

2. Partie de siège selon la revendication 1,
**caractérisée en ce que** l'élément de revêtement est fixé à la partie d'habillage souple côté intérieur au moyen d'un nombre de joints.

3. Partie de siège selon la revendication 1 ou 2,
**caractérisée en ce que** l'élément de revêtement est collé à la partie d'habillage souple côté intérieur.

4. Partie de siège selon l'une quelconque des revendications précédentes,
**caractérisée en ce que** l'élément de revêtement est agrafé à la partie d'habillage souple côté intérieur.

5. Partie de siège selon l'une quelconque des revendications précédentes,
**caractérisée en ce que** la partie d'habillage souple côté intérieur est formée en un matériau moussé ou en un matériau plastique souple.

6. Partie de siège selon la revendication 5,
**caractérisée en ce que** la partie d'habillage souple côté intérieur est mise en forme à chaud.

7. Partie de siège selon l'une quelconque des revendications précédentes,
**caractérisée par** un nombre d'ouvertures de passage (10.1) et/ou par un nombre d'évidements (10.2, 10.3).

8. Partie de siège selon l'une quelconque des revendications précédentes, **caractérisée en ce que** l'élément de revêtement est une couche de matériau de recouvrement (2), notamment une découpe de matériau de recouvrement (2.1), et **en ce qu'**une couche de matériau support (4), notamment une découpe de matériau support (4.1), est prévue, et **en ce qu'**une couche adhésive, notamment un non-tissé adhésif (3), est agencée entre la couche de matériau de recouvrement (2) et la couche de matériau support (4).

9. Partie de siège selon la revendication 8, dans laquelle un matériau de recouvrement de la couche de matériau de recouvrement (2) et un matériau support de la couche de matériau support (4) sont assemblés l'un à l'autre au moyen de la couche adhésive ou du non-tissé adhésif (3) par un procédé de mise en forme sous pression et d'assemblage sous pression.

10. Partie de siège selon la revendication 8 ou 9, dans laquelle le matériau de recouvrement et le matériau support sont assemblés l'un à l'autre au moyen du non-tissé adhésif (3) ou de la couche adhésive par un procédé de mise en forme sous pression et d'assemblage sous pression au moyen d'énergie haute fréquence.

11. Partie de siège selon l'une quelconque des revendications 8 à 10, dans laquelle le matériau de recouvrement est un matériau vinyle, un matériau textile ou un matériau naturel.

12. Partie de siège selon l'une quelconque des revendications 8 à 11, dans laquelle le matériau support est un non-tissé support, notamment un feutre ou non-tissé de presse.

13. Partie de siège selon l'une quelconque des revendications 8 à 12, dans laquelle le non-tissé adhésif (3) est un non-tissé de co-polyester ou un non-tissé thermoplastique.

14. Siège de véhicule, comportant un dossier de siège et une partie de siège, la partie de siège comportant un rembourrage de siège muni d'un revêtement, ainsi qu'un cadre de siège, **caractérisé par** une partie de siège selon l'une quelconque des revendications précédentes.
